# EUROPÄISCHE PATENTSCHRIFT

(11) **EP 2 747 391 B1**
(45) Veröffentlichungstag und Bekanntmachung des Hinweises auf die Patenterteilung: **16.08.2017**
(21) Anmeldenummer: 12199195.4
(22) Anmeldetag: 21.12.2012
(51) Int. Cl.: H04M 1/725

(54) **Vorrichtung zur Notfallsignalisierung bei einem Fahrzeugaufprall und Verfahren zum Betreiben**
Device for emergency signalling in case of a vehicle collision and method for operating same
Dispositif de signalisation d'urgence en cas de collision d'un véhicule et procédé d'actionnement

(43) Veröffentlichungstag der Anmeldung: 25.06.2014
(73) Patentinhaber: Gesamtverband der Deutschen Versicherungswirtschaft e.V., 10117 Berlin (DE)
(72) Erfinder: Bartenwerfer, Jens, 16540 Hohen Neuendorf (DE); Chiachiarella, Fred, 16766 Kremmen (DE); Redlich, Jürgen, 12527 Berlin (DE); Jenny, Walter, 71139 Ehningen (DE)
(74) Vertreter: Bittner, Thomas L.

(56) Entgegenhaltungen:
- EP-A1- 1 950 108
- DE-A1- 2 639 617
- DE-A1- 19 546 700
- DE-B4-102009 033 560
- DE-U1- 9 407 617
- TW-B- I 271 336
- US-A1- 2005 134 218

## Beschreibung

Die Erfindung bezieht sich auf eine Anordnung mit einer Vorrichtung zur Notfallsignalisierung bei einem Fahrzeugaufprall sowie ein Verfahren zum Betreiben.

### Hintergrund

Die Notfallsignalisierung bei einem Fahrzeugaufprall dient insbesondere dazu, die Information über den Aufprall des Fahrzeuges automatisch an zuständige Stellen zu übertragen, beispielsweise eine Notfallservicezentrale oder auch an einen Rettungsdienst. Aus dem Dokument DE 10 2009 033 560 B4 ist in diesem Zusammenhang ein Verfahren bekannt, bei dem die Notfallnachricht von einem mobilen Gerät abgesendet wird, nachdem zuvor Beschleunigungs- und Geschwindigkeitsdaten erfasst und ausgewertet wurden. Auch in dem Dokument DE 10 2007 024 177 A1 ist ein Verfahren zum Abgeben eines Notrufes über eine Mobilfunkeinrichtung bekannt. Ähnlich betrifft das Dokument US 2005 / 0208925 A1 eine automatische Notfallnachricht, die von einem Mobilfunktelefon abgesendet wird.

Neben der Verwendung eines Mobilfunktelefons, welches sich im Fahrzeug befindet, zum Absenden einer Notfallnachricht im Fall eines Aufpralls wurde vorgeschlagen, hierfür geeignete Geräte mittels Festinstallation in Kraftfahrzeugen nachzurüsten. Solche Nachrüstmodule verfügen üblicherweise über Beschleunigungssensoren, um Erschütterungen am Fahrzeug zu messen. Beim Überschreiten von Grenzwerten wird eine Funkverbindung zum Übermitteln von Unfalldaten initiiert. Hierbei erfolgt eine Datenübertragung, ohne dass eine Sprachverbindung zur Notrufzentrale aufgebaut wird.

Im Dokument TW I 271 336 B ist eine Geschwindigkeitsmesseinrichtung vorgeschlagen, welche unter Verwendung von GPS-Signalen die Geschwindigkeit eines Kraftfahrzeugs bestimmt. Die Messvorrichtung ist zur Spannungsversorgung über ein Kabel mit der Buchse eines Zigarettenanzünders im Kraftfahrzeug verbunden. Eine gleiche Spannungsversorgung ist in dem Dokument DE 195 46 700 A1 für eine Vorrichtung zum Anzeigen eines Schadstoff-Gehalts in einem Innenraum eines Kraftfahrzeugs beschrieben. Als Sensor wird beispielsweise ein CO-Sensor eingesetzt, um einen Schadstoffgehalt im Innenraum des Kraftfahrzeugs zu bestimmen. Beim Überschreiten eines Schadstoffkonzentrations-Grenzwertes erfolgt eine entsprechende Anzeige.

Im Dokument US 2005/0134218 A1 ist ein Ladegerät für ein Mobilfunktelefon offenbart, wobei das Ladegerät eine Steckbuchse aufweist, in die ein Stecker einsteckbar ist, welcher über ein Kabel mit dem zu ladenen Mobilfunktelefon verbunden ist.

Im Dokument DE 26 39 617 ist eine Garagentor-Öffnungseinrichtung offenbart, die mittels Stecker in eine Buchse des Zigarettenanzünders einsteckbar ist. In ähnlicher Weise zeigt das Dokument EP 1 950 108 A1 eine Vorrichtung zur Diebstahlsicherung in einem Kraftfahrzeug, die über einen Stecker in die Buchse des Zigarettenanzünders einsteckbar ist.

### Zusammenfassung

Aufgabe der Erfindung ist es, eine Anordnung mit einer Vorrichtung zur Notfallsignalisierung aus einem Fahrzeug sowie ein Verfahren zum Betreiben anzugeben, die eine flexible Nutzung ermöglichen, insbesondere auch eine mit wenig Aufwand durchführbare Montage und Demontage am Fahrzeug unterstützen.

Diese Aufgabe wird gelöst durch eine Anordnung mit einer Vorrichtung zur Notfallsignalisierung aus einem Fahrzeug nach dem unabhängigen Anspruch 1. Weiterhin ist ein Verfahren zum Betreiben nach dem unabhängigen Anspruch 7 vorgesehen. Vorteilhafte Ausgestaltungen sind Gegenstand von Unteransprüchen.

Nach einem Aspekt ist für die Benutzung in einem Fahrzeug eine Anordnung mit einer Vorrichtung zur Notfallsignalisierung, insbesondere bei einem Fahrzeugaufprall oder einer anderen unfallbedingten Situation, geschaffen, welche ein Gehäuse und eine im Gehäuse angeordnete Detektionseinrichtung aufweist. Die Detektionseinrichtung ist konfiguriert, elektronische Messinformationen betreffend einen notfallbedingten Fahrzeugzustand, zum Beispiel infolge eines Aufpralls oder eines anderen Grundes detektierte Erschütterungen, von einer oder mehreren Sensoreinrichtungen, die im Gehäuse und / oder extern gebildet sind, zu erfassen. So kann vorgesehen sein, eine Sensoreinrichtung, beispielsweise zum Erfassen von Beschleunigungs- und / oder Geschwindigkeitsdaten, im Gehäuse der Vorrichtung selbst anzuordnen. Ergänzend oder alternativ kann vorgesehen sein, eine oder mehrere externe Sensoreinrichtungen auszuwerten, beispielsweise Sensoren, die an der Fahrzeugkarosserie oder im Innenraum des Fahrzeuges angebracht sind.

Die Vorrichtung verfügt weiterhin über eine Datenkommunikationseinrichtung in dem Gehäuse. Die Datenkommunikationseinrichtung ist konfiguriert, Datensignale zumindest betref fend eine Notfallnachricht über eine Datenschnittstelle abzugeben, die als Teil der Datenkommunikationseinrichtung im Gehäuse angeordnet ist. Die Notfallnachricht umfasst die elektronischen Messinformationen, welche von der oder den Sensoreinrichtungen erfasst wurden, zumindest teilweise und zusätzlich oder alternativ hiervon abgeleitete elektronische Fahrzeugzustandsinformationen, zum Beispiel eine Zeitinformation zu einem Ereignis. Es kann also vorgesehen sein, dass die von den Sensoreinrichtungen detektierten elektronischen Messinformationen selbst abgesendet werden, um sie dann extern auszuwerten. Aber auch in dem Gehäuse selbst kann mit der Hilfe der Detektionseinrichtung und wahlweise unter Nutzung weiterer Komponenten, zum Beispiel einer Steuereinrichtung, eine zumindest teilweise Aufbereitung der erfassten elektronischen Messinformationen stattfinden, dahingehend, dass eine Notfallnachricht automatisch erzeugt wird, beispielsweise beim Überschreiten von vorgegebenen Grenzwerten für die elektronischen Messdaten. Die elektronischen Aufprallinformationen können im einfachsten Fall nur eine Nachricht darüber enthalten, dass ein Aufprallereignis stattgefunden hat.

Sodann verfügt die Vorrichtung über eine Steckeinrichtung, die an dem Gehäuse gebildet ist und einen Steckverbinder aufweist, welcher in eine Kfz-Steckbuchse einsteckbar ist, um die Vorrichtung im Fahrzeug lösbar anzuordnen. Die Vorrichtung zur Notfallsignalisierung kann aus dem Fahrzeug einfach dadurch entfernt werden, dass der Steckverbinder aus der Kfz-Steckbuchse gezogen wird. Über die Kfz-Steckbuchse kann eine elektrische Spannung aus dem Bordnetzwerk des Fahrzeuges bereitgestellt werden. Die Kfz-Steckbuchse kann im Zigarettenanzünder gebildet sein.

Die Anordnung weist weiterhin ein externes Kommunikationsgerät auf.

Die Datenkommunikationseinrichtung ist eingerichtet, die Datensignale über die Datenschnittstelle mittels einer drahtlosen Nahfelddatenkommunikation auf ein im Nahfeldbereich angeordnetes, externes Kommunikationsgerät zu übertragen. Für eine Nahfeldbereichdatenkommunikation stehen beispielsweise die WLAN- oder die Bluetooth-Technologie zur Verfügung. Mittels der Nahfelddatenkommunikation wird zumindest die Notfallnachricht an das externe Kommunikationsgerät übertragen, bei dem es sich beispielsweise um ein Mobilfunktelefon handelt. Das externe Kommunikationsgerät seinerseits ist dann in der Lage, die Daten in ein Fernnetz, beispielweise ein Mobilfunknetz oder ein mobiles Datennetz, zu übertragen, zum Beispiel zur Übermittlung der Daten an eine Notfall- oder Servicezentrale. Das externe Kommunikationsgerät ist vorzugsweise ein mobiles Kommunikationsgerät.

Das Anordnen der Steckeinrichtung an dem Gehäuse kann über ein Kabelstück erfolgen, dessen proximales Ende am Gehäuse und dessen distales Ende am Steckverbinder gebildet sind. Alternativ kann vorgesehen sein, dass der Steckverbinder direkt am Gehäuse angeformt ist. Er kann Teil des Gehäuses selbst sein, beispielweise derart, dass ein mit dem Steckverbinder gebildeter Gehäuseabschnitt in die Kfz-Buche einsteckbar ist.

Mit Hilfe der Vorrichtung zur Notfallsignalisierung ist ein mobiles Gerät geschaffen, welches problemlos in beliebigen Fahrzeugtypen nachgerüstet werden kann. Auch ermöglicht die vor geschlagene Vorrichtung es dem Nutzer, diese in verschiedenen Fahrzeugen einzusetzen, in dem die Vorrichtung dort jeweils in eine der vorhandenen Kfz-Steckbuchsen gesteckt wird.

Eine Weiterbildung sieht vor, dass der Steckverbinder zumindest einen elektrischen Steckerkontakt aufweist, welcher konfiguriert ist, im eingesteckten Zustand über einen zugeordneten Buchsenkontakt an eine elektrische Energieversorgung in der Kfz-Steckbuchse anzuschließen. Auf diese Weise wird eine über die Kfz-Steckbuchse bereitgestellte elektrische Spannung des Bordnetzes des Fahrzeuges für die Komponenten und Module der Vorrichtung zur Notfallsignalisierung nutzbar gemacht. Es kann vorgesehen sein, dass die Vorrichtung frei von einer eigenen Energieversorgung ist. Alternativ kann in dem Gehäuse eine Batterieeinrichtung und / oder eine Akkueinrichtung vorgesehen sein, wobei letztere über die Energieversorgung in der Kfz-Steckbuchse aufladbar sein kann. Zu diesem Zweck steht die Akkueinrichtung in elektrischem Kontakt mit dem zumindest einen elektrischen Steckerkontakt.

Bei einer Ausgestaltung kann vorgesehen sein, dass die Detektionseinrichtung an eine oder mehrere Sensoreinrichtungen aus der folgenden Gruppe von Sensoreinrichtung koppelt: Beschleunigungssensor, Geschwindigkeitssensor, Drehratensensor (Gyroskop) und Positionssensor. Mit Hilfe der verschiedenen Sensoreinrichtungen können unterschiedliche physikalische Messgrößen erfasst werden, die dann mittels der Detektionseinrichtung und / oder anderer Auswertemodule im oder außerhalb des Gehäuses datentechnisch ausgewertet werden können, um insbesondere das Überschreiten von Grenzwerten festzustellen, die zum Beispiel eine Aufprall- oder Notfallsituation anzeigen. Die Sensoreinrichtungen außerhalb des Gehäuses, die auch externe Sensoreinrichtung bezeichnet werden können, können im Fahrzeug fest montiert sein. Alternativ oder ergänzend kann auch auf Sensoreinrichtungen in einem mobilen Gerät zurückgegriffen werden, zum Beispiel einen Positionssensor in einem Mobilfunktelefon. Zumindest der Beschleunigungssensor kann in dem Gehäuse der Vorrichtung aufgenommen sein. Der Anschluss externer Sensoren kann über kabellose oder kabelgebundene Datenverbindungen erfolgen. Zu dem Zweck können an dem Gehäuse ein oder mehrere Steckbuchsen vorgesehen sein, um lösbare Kabelverbindungen zu externen Sensoreinrichtungen herzustellen.

Eine Fortbildung sieht vor, dass die Datenschnittstelle einen Kabelanschluss aufweist, über welche eine kabelgebundene Datenverbindung zu einem externen Kommunikationsgerät ausbildbar ist, und dass die Datenkommunikationseinrichtung eingerichtet ist, die Datensignale über die Datenschnittstelle mittels kabelgebundener Datenkommunikation auf das externe Kommunikationsgerät zu übertragen. Bei dieser Ausführung erfolgt die Übertragung der Notfallnachricht über eine kabelgebundene Datenverbindung zum externen Kommunikationsgerät, welches seinerseits die erhaltenen Daten weiter überträgt, zum Beispiel an die Notrufzentrale. Die Kabelverbindung kann beispielsweise mit Hilfe eines sogenannten USB-Kabels hergestellt werden, zum Beispiel zum Anschließen eines Mobilfunktelefons. Der Kabelanschluss kann eine Kabelanschlussbuchse und / oder einen Kabelanschlussstecker zum Ankoppeln des Kabels aufweisen.

Bei einer Ausgestaltung kann vorgesehen sein, dass das externe Kommunikationsgerät im angeschlossenen Zustand über den Kabelanschluss an die elektrische Energieversorgung in der Kfz-Steckbuchse angeschlossen ist. Bei dieser Ausführungsform wird das externe Kommunikationsgerät, beispielsweise ein Mobilfunktelefon, über die steckbare Vorrichtung zur Notfallsignalisierung an das Bordnetz des Fahrzeuges angeschlossen, so dass das externe Kommunikationsgerät mit elektrischer Spannung versorgt wird. Der Kabelanschluss kann mit einer Kabelanschlussbuchse am Gehäuse der Vorrichtung oder am Ende eines hiervon ausgehenden Kabelabschnitts gebildet sein. Alternativ kann es sich bei der Kabelanschlussbuchse um einen Kabelanschlussstecker handeln.

Eine Weiterbildung kann vorsehen, dass die Datenkommunikationseinrichtung eingerichtet ist, die Datensignale über die Datenschnittstelle mittels einer drahtlosen Datenkommunikation an eine entfernte Serviceeinrichtung zu übertragen. Die Datenkommunikationseinrichtung ist hier selbst in der Lage, die Datensignale zumindest betreffend die Notfallnachricht und wahlweise andere Informationen an eine entfernte Serviceeinrichtung, zum Beispiel einen Datenserver, zu übermitteln. Zu diesem Zweck kann die im Gehäuse aufgenommene Datenkommunikationseinrichtung mobilfunktechnisch ausgerüstet sein, so dass die Datensignale über ein Mobilfunknetz übermittelbar sind. Die Datenkommunikationseinrichtung kann hierfür mit einem Funkmodul gebildet sein, insbesondere einem sogenannten GSM-Modul.

In Verbindung mit dem Verfahren zum Betreiben der Vorrichtung zur Notfallsignalisierung bei einem Fahrzeugaufprall gelten die vorangehend gemachten Erläuterungen entsprechend.

So kann vorgesehen sein, die Notfallnachricht zunächst von der einsteckbaren Vorrichtung mit Hilfe der Datenkommunikationseinrichtung zu einem externen Kommunikationsgerät zu übermitteln, beispielsweise zu einem Mobilfunktelefon, welches dann seinerseits die Notfallnachricht weiterleitet über das Mobilfunknetz. Alternativ kann aber auch vorgesehen sein, die Notfallnachricht direkt von der in die Kfz-Steckbuchse eingesteckten Vorrichtung ins Mobilfunknetz zu übertragen.

Nach dem Eingang der Notfallnachricht in einer Servicezentrale kann vorgesehen sein, dass hierauf automatisch ein Rückruf erfolgt, entweder zu dem Mobilfunktelefon, welches die Notafallnachricht übermittelt hat, oder zu einer in der Servicezentrale hinterlegten Mobilfunkeinrichtung, beispielsweise dann, wenn die Notfallnachricht von der eingesteckten Vorrichtung zur Notfallsignalisierung selbst übermittelt wurde.

Es kann vorgesehen sein, für in der Servicezentrale eingehende Notfallnachrichten datentechnisch einen Log-File anzulegen.

Beim Auswerten der elektronischen Messinformationen von den Sensoreinrichtungen können unterschiedliche Algorithmen genutzt werden, die auf verschiedene Art und Weise, je nach Anwendungssituation, Kriterien festlegen, dahingehend, beim Vorliegen welcher Messwerte eine Notfallnachricht automatisch erzeugt und abgegeben wird. Hinzu kann die Detektionseinrichtung im Gehäuse der Vorrichtung hardware- und softwaremäßig mit ausreichender Kapazität ausgestattet werden, beispielsweise mit einem Mikroprozessor und zugeordnetem Speicher.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einer Vorrichtung zur Notfallsignalisierung, die über eine Kabelverbindung mit einem Mobilfunktelefon verbunden ist, wobei das Kabel über eine Steckverbindung angeschlossen ist,
- Fig. 2: eine schematische Darstellung einer Anordnung mit einer einsteckbaren Vorrichtung zur Notfallsignalisierung und einem Mobilfunktelefon, welches über eine Kabelverbindung angeschlossen ist, wobei das Kabel aus dem Gehäuse der einsteckbaren Vorrichtung herausgeführt ist.
- Fig. 3: eine schematische Darstellung einer Anordnung mit einer einsteckbaren Vorrichtung zur Notfallsignalisierung und einem Mobilfunktelefon, die über eine drahtlose Datenkommunikationsverbindung verbunden sind.
- Fig. 4: eine schematische Blockbilddarstellung für eine Vorrichtung zur Notfallsignalisierung,
- Fig. 5: eine schematische Blockbilddarstellung für eine weitere Vorrichtung zur Notfallsignalisierung und
- Fig. 6: eine schematische Darstellung zum Ablauf in einer Aufprallsituation.

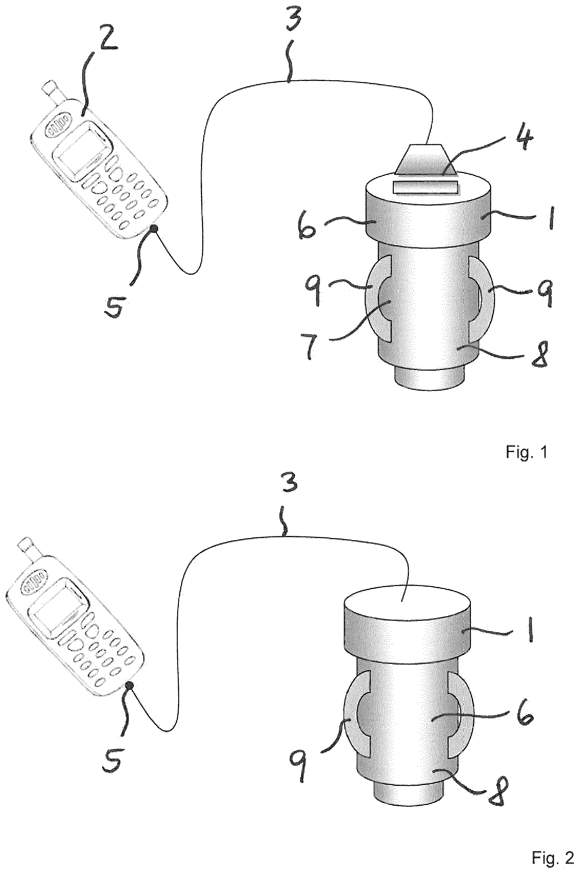

Fig. 1 zeigt eine schematische Darstellung einer Anordnung mit einer als Steckbauteil ausgeführten Vorrichtung 1 zur Notfallsignalisierung, zum Beispiel bei einem Fahrzeugaufprall oder anderen unfallbedingten Erschütterungen, sowie einem Mobilfunktelefon 2. Die Vorrichtung 1 und das Mobilfunktelefon 2 sind über ein Kabel 3 miteinander verbunden, bei dem es sich beispielsweise um ein USB-Kabel handelt, welches über eine Steckverbindung 4 an die Vorrichtung 1 ankoppelt. Über eine weitere Steckverbindung 5 koppelt das Kabel 3 an das Mobilfunktelefon 2.

Die Vorrichtung 1 verfügt über ein Gehäuse 6, an dem die Steckverbindung 4 gebildet ist. Am Gehäuse 6 ist im unteren Bereich 7 ein einen Steckverbinder 8 bildender Gehäuseabschnitt vorgesehen, welcher angepasst ist zum Einstecken in eine standardisierte Kfz-Steckbuchse (nicht dargestellt), die zum Beispiel im Zigarettenanzünder angeordnet sein kann. Am Gehäuse 6 sind im Bereich des Steckverbinders 8 weiterhin Anschlusskontakte 9 gebildet, die im eingesteckten Zustand mit zugeordneten Buchsenkontakten der Kfz-Steckbuchse zusammenwirken, derart, dass ein Anschluss zur elektrischen Energieversorgung (Bordnetz) des Fahrzeuges hergestellt ist. Diese elektrische Energieversorgung kann beispielsweise dazu dienen, die Komponenten und Module im Gehäuse 6 mit Spannung zu versorgen. Auch kann vorgesehen sein, dass auf diese Weise die elektrische Spannung an der Steckverbindung 4 bereitgestellt ist, um das Mobilfunktelefon 2 zu laden.

Fig. 2 zeigt eine schematische Darstellung vergleichbar Fig. 1, wobei das Kabel 3 nun nicht über die Steckverbindung 4 angeschlossen ist, sondern aus dem Gehäuse 1 herausgeführt ist.

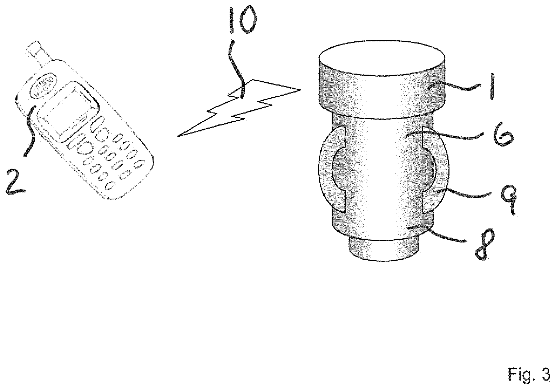

Fig. 3 zeigt eine Ausführung, bei der die Datenübertragung zwischen der Vorrichtung 1 und dem Mobilfunktelefon 3 nicht über das Kabel 3 erfolgt, sondern über eine kabellose Datenkommunikationsverbindung 10, beispielsweise über eine Nahfelddatenkommunikation wie Bluetooth oder WLAN.

Bei den verschiedenen Ausführungsformen kann vorgesehen sein, dass die Vorrichtung 1 zur Notfallsignalisierung im Gehäuse 6 ein Funkmodul aufnimmt, beispielsweise ein GSM-Modul, so dass alternativ zur Übertragung von Nachrichten auf das Mobilfunktelefon 2 ein Absenden und Empfangen von Datensignalen direkt über ein Mobilfunknetz erfolgen kann.

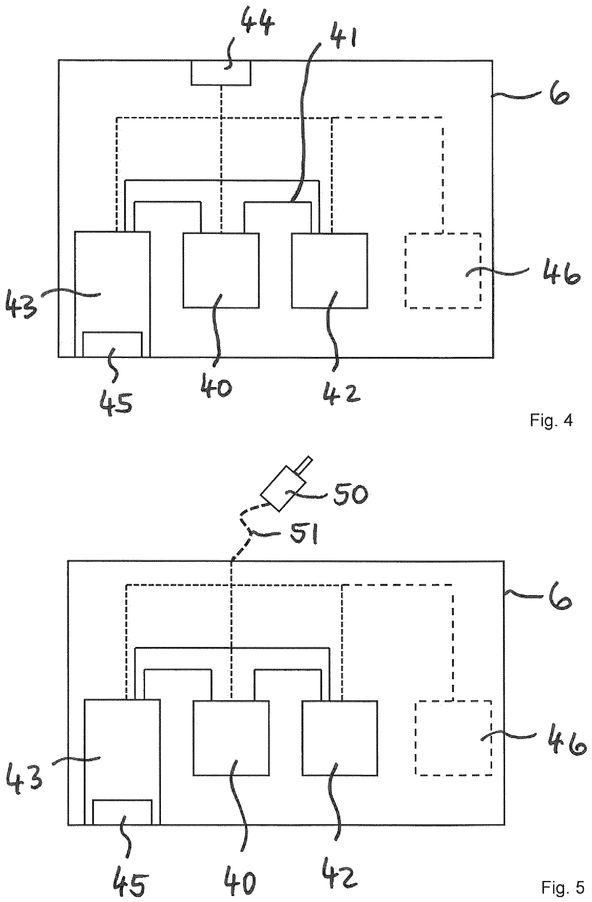

Die Fig. 4 und 5 zeigen schematische Blockbilddarstellungen für die Vorrichtung 1 zur Notfallsignalisierung.

Bei der gezeigten Ausführungsform ist im Gehäuse 6 eine Detektionseinrichtung 40 vorgesehen, die zum Austausch von elektronischen Daten über Datenkanäle 41 mit einer Sensoreinrichtung 42 sowie einer Datenkommunikationseinrichtung 43 verbunden ist. Alternativ kann die Detektionseinrichtung 40 mit außerhalb des Gehäuses 6 angeordneten Sensoreinrichtungen verbunden sein (nicht dargestellt). Auch eine kombinierte Erfassung von elektronischen Messdaten von im und außerhalb des Gehäuses 6 angeordneten Sensoreinrichtungen kann vorgesehen sein.

Die Detektionseinrichtung 40, die Sensoreinrichtung 42 sowie die Datenkommunikationseinrichtung 43 sind jeweils elektrisch verbunden (gestrichelte Linien in Fig. 4) mit einem elektrischen Steckerkontakt 44 (vgl. Anschlusskontakte 9 oben), über welchen der Anschluss an das Bordnetzwerk des Fahrzeuges erfolgt, um die Module und Komponenten mit elektrischer Spannung zu versorgen.

Wenn bei der Auswertung der elektronischen Messdaten, welche insbesondere Beschleunigungs-, Positions- und / oder Geschwindigkeitsdaten für das Fahrzeug umfassen, Grenzwerte überschritten werden, die einen Aufprall des Fahrzeuges anzeigen, erzeugt die Detektionseinrichtung 40 eine Notfallnachricht, die über die Datenverbindung 41 an die Datenkommunikationseinrichtung 43 übermittelt wird, so dass diese über eine Datenschnittstelle 45 die Notfallnachricht absendet, sei es über eine kabelgebundene oder eine kabellose Datenkommunikationsverbindung, zum Beispiel an das Mobilfunktelefon 2 (vergleiche Fig. 1 bis 3). Im Fall der Ausführung nach den Fig. 1 kann die Datenschnittstelle 45 an die Steckverbindung 4 koppeln.

Alternativ kann vorgesehen sein, dass die Detektionseinrichtung 40 selbst keine Auswertung der elektronischen Messinformationen vornimmt, sondern diese über die Datenkommunikationseinrichtung 43 an eine externe Auswerteeinrichtung (nicht dargestellt) übersendet, zum Beispiel ein Mobilfunktelefon, wo die Datenauswertung stattfindet und bei Bedarf die Notfallnachricht erzeugt wird.

Im Gehäuse 6 können weitere Funktionskomponenten 46 angeordnet sein, zum Beispiel einer Spannungsversorgung.

Fig. 5 zeigt eine Ausführungsform, bei der ein Steckverbinder 50 über ein Kabelstück 51 an das Gehäuse 1 angeschlossen ist. Der Steckverbinder 50 dient dem Einstecken in eine Kfz-Steckbuchse und weist wahlweise auch einen dem Anschlusskontakt 9 entsprechenden Kontakt zum Anschluss an das Bordnetz auf.

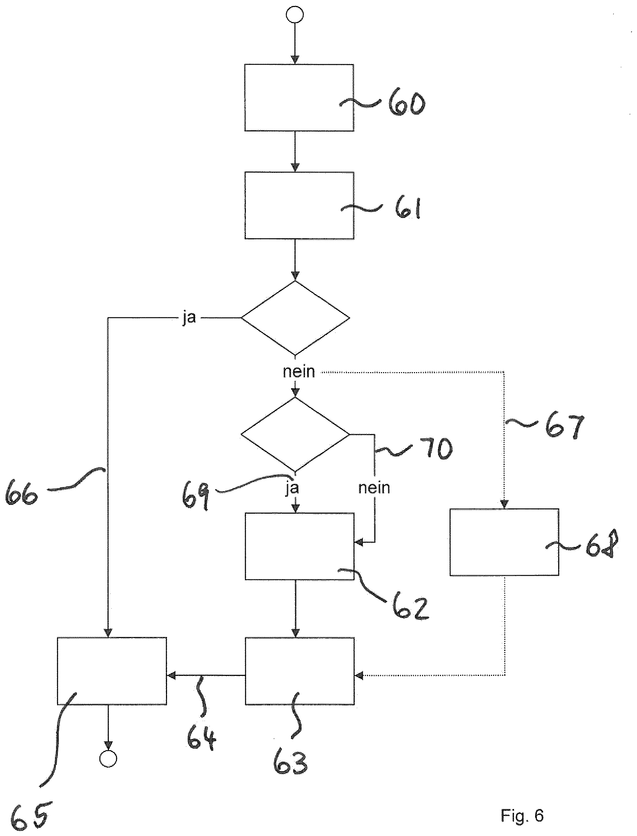

Fig. 6 zeigt eine schematische Darstellung zum möglichen Ablauf der Notfallsignalisierung im Fall eines Aufpralls. Findet ein Aufprall (Unfall) 60 statt, so erzeugt die Vorrichtung 1 zur Notfallsignalisierung eine Notfallnachricht im Schritt 61, die dann von der Vorrichtung 1 selbst oder über das Mobilfunktelefon 2 abgesendet wird. Hierzu erfolgt ein Verbindungsaufbau zu einer Servicezentrale 62. Wird in diesem Zusammenhang das Mobilfunktelefon 2 einbezogen, so wird das Empfangen und Weiterleiten der Notfallnachricht dort mit Hilfe einer auf dem Mobilfunktelefon 2 installierten Applikation gehandhabt. Die Servicezentrale 62 kann hierauf in einem Schritt 63 Prozesse oder Maßnahmen einleiten, zum Beispiel die Benachrichtigung eines Rettungsdienstes. In einem Schritt 64 kann vorgesehen sein, in einem Log-File 65 Informationen über die Notfallnachricht zu hinterlegen, insbesondere nach Abschluss des Notrufes. Sollte während des Notrufes entschieden werden, diesen abzubrechen, kann ein solcher Log-File-Eintrag auch ohne Einbezug der Servicezentrale 62 in einem Schritt 66 erfolgen. Wird der Notruf fortgeführt, kann in einem Schritt 67 über ein gesichertes Netzwerk 68 eine Initiierung der Notfallmaßnahmen erfolgen.

Das Verbinden mit der Servicezentrale 62 kann in einem Schritt 69 sofort oder in einem Schritt 70 zeitverzögert erfolgen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Anordnung, mit
- einer Vorrichtung (1) zur Notfallsignalisierung aus einem Fahrzeug, mit
- einem Gehäuse (6),
- einer Detektionseinrichtung (40), die in dem Gehäuse (6) angeordnet und geeignet ist, elektronische Messinformationen betreffend einen notfallbedingten Fahrzeugzustand von einer oder mehreren Sensoreinrichtungen (42), die im Gehäuse (6) und / oder extern gebildet sind, zu erfassen,
- einer Datenkommunikationseinrichtung (43), die in dem Gehäuse (6) angeordnet und eingerichtet ist, Datensignale betreffend eine Notfallnachricht über eine Datenschnittstelle (45) abzugeben, wobei die Notfallnachricht die elektronischen Messinformationen zumindest teilweise und / oder hiervon abgeleitete elektronische Fahrzeugzustandsinformationen umfasst, wobei die Datenkommunikationseinrichtung (43) eingerichtet ist, die Datensignale betreffend die Notfallnachricht über die Datenschnittstelle (45) mittels einer drahtlosen Nahfelddatenkommunikation auf ein im Nahfeldbereich angeordnetes, externes Kommunikationsgerät (2) zu übertragen, und
- einer Steckeinrichtung, die an dem Gehäuse (6) angeordnet ist und einen Steckverbinder (8; 50) zum Einstecken in eine Kfz-Steckbuchse aufweist, und wobei
- das externe Kommunikationsgerät (2) eingerichtet ist, die Notfallnachricht in ein Fernnetz zu übertragen.

2. Anordnung nach Anspruch 1, **dadurch gekennzeichnet, dass** der Steckverbinder zumindest einen elektrischen Steckerkontakt (9) aufweist, welcher konfiguriert ist, im eingesteckten Zustand über einen zugeordneten Buchsenkontakt an eine elektrische Energieversorgung in der Kfz-Steckbuchse anzuschließen.

3. Anordnung nach Anspruch 1 oder 2, **dadurch gekennzeichnet, dass** die Detektionseinrichtung (40) an eine oder mehrere Sensoreinrichtungen (42) aus der folgenden Gruppe von Sensoreinrichtung koppelt: Beschleunigungssensor, Drehratensensor (Gyroskop), Geschwindigkeitssensor und Positionssensor.

4. Anordnung nach mindestens einem der vorangehenden Ansprüche, **dadurch gekennzeichnet, dass** die Datenschnittstelle (45) einen Kabelanschluss (4) aufweist, über welche eine kabelgebundene Datenverbindung zu dem externen Kommunikationsgerät (2) ausbildbar ist, und die Datenkommunikationseinrichtung (43) eingerichtet ist, die Datensignale über die Datenschnittstelle (45) mittels kabelgebundener Datenkommunikation auf das externe Kommunikationsgerät (2) zu übertragen.

5. Anordnung nach den Ansprüchen 2 und 4, **dadurch gekennzeichnet, dass** der zumindest eine elektrische Steckerkontakt (9) mit dem Kabelanschluss (4) elektrisch verbunden ist, derart, dass das externen Kommunikationsgerät (2) im angeschlossenen Zustand über den Kabelanschluss an die elektrische Energieversorgung in der Kfz-Steckbuchse angeschlossen ist.

6. Anordnung nach mindestens einem der vorangehenden Ansprüche, dadurch **gekenn- zeichnet,** dass die Datenkommunikationseinrichtung (43) eingerichtet ist, die Datensignale über die Datenschnittstelle (45) mittels einer drahtlosen Datenkommunikation an eine entfernte Serviceeinrichtung zu übertragen.

7. Verfahren zum Betreiben einer Anordnung mit einer Vorrichtung (1) zur Notfallsignalisierung und einem externen Kommunikationsgerät (2) aus einem Fahrzeug, wobei das Verfahren die folgenden Schritte aufweist:
- Bereitstellen einer Vorrichtung (1) zur Notfallsignalisierung, die ein Gehäuse (6), eine Detektionseinrichtung (40) und eine Datenkommunikationseinrichtung (43), welche in dem Gehäuse (6) angeordnet sind, sowie eine an dem Gehäuse (6) angeordnete und mit einem Steckverbinder (8; 50) gebildete Steckeinrichtung aufweist,
- Anordnen der Vorrichtung (1) zur Notfallsignalisierung in einem Fahrzeug, indem der Steckverbinder (8; 50) in eine Kfz-Steckbuchse des Fahrzeuges eingesteckt wird,
- Erfassen von elektronischen Messinformationen betreffend einen notfallbedingten Fahrzeugzustand von einer oder mehreren im Gehäuse und / oder extern gebildeten Sensoreinrichtungen (42) durch die Detektionseinrichtung (40),
- Absenden von Datensignalen betreffend eine Notfallnachricht über eine Datenschnittstelle (45) der Datenkommunikationseinrichtung (43) mittels einer drahtlosen Nahfelddatenkommunikation auf ein im Nahfeldbereich angeordnetes, externes Kommunikationsgerät (2), wobei die Notfallnachricht die elektronischen Messinformationen zumindest teilweise und / oder hiervon abgeleitete elektronische Fahrzeugzustandsinformationen umfasst, und
- Übertragen der Notfallnachricht durch das externe Kommunikationsgerät (2) in ein Fernnetz.

## Claims

1. A system with:
- a device (1) for emergency signalling from a vehicle, with:
- a housing (6),
- a detection device (40), which is arranged in the housing (6) and suitable to record electronic measurement information concerning an emergency-related vehicle state from one or a number of sensor devices (42) which are formed inside the housing (6) and/or externally,
- a data communication device (43) which is arranged in the housing (6) and configured to send data signals concerning an emergency notification via a data interface (45), wherein the emergency notification comprises the electronic measurement information, at least partially, and/or electronic information concerning the state of a vehicle derived from that electronic measurement information, wherein the data communication device (43) is configured to transmit the data signals concerning the emergency notification via the data interface (45) by means of a wireless near-field data communication to an external communication device (2) arranged in the near-field area, and
- a plug-in device which is arranged on the housing (6) and has a plug connector (8; 50) for plugging into a vehicle socket, and wherein
- the external communication device (2) is configured to transmit the emergency notification to a wide-area network.

2. The system according to claim 1, **characterised in that** the plug connector has at least one plug contact (9), which is configured, in its plugged-in state, to connect to an energy supply via an assigned socket contact in the vehicle socket.

3. The system according to claim 1 or 2, **characterised in that** the detection device (40) is coupled to one or a number of sensor devices (42) from the following group of sensor devices: acceleration sensor, rotational rate sensor (gyroscope), speed sensor and position sensor.

4. The system according to at least one of the preceding claims, **characterised in that** the data interface (45) has a cable connection (4), via which a wired data connection to the external communication device (2) can be formed, and the data communication device (43) is configured to transmit the data signals via the data interface (45) by means of wired data communication to the external communication device (2).

5. The system according to claims 2 and 4, **characterised in that** the at least one electrical plug contact (9) is electrically connected with the cable connection (4), in such a way that the external communication device (2), in the connected state, is connected to the electrical energy supply in the vehicle socket via the cable connection.

6. The system according to at least one of the preceding claims, **characterised in that** the data communication device (43) is configured to transmit the data signals via the data interface (45) by means of a wireless data communication to a remote service centre.

7. A method for operating a system with a device (1) for emergency signalling and an external communication device (2) from a vehicle, wherein the method comprises the following steps:
- providing of a device (1) for emergency signalling, which has a housing (6), a detection device (40) and a data communication device (43), which are arranged in the housing (6), as well as a plug-in device arranged on the housing (6) and formed with a plug connector (8; 50),
- arranging of the device (1) for emergency signalling, in a vehicle, in which the plug connector (8; 50) is plugged into a plug socket of the vehicle,
- recording, by the detection device (40), of electronic measurement information concerning a vehicle in an emergency state with one or a number of sensor devices (42) formed inside the housing and/or externally,
- sending of data signals concerning an emergency notification via a data interface (45) of the data communication device (43) by means of a wireless near-field data communication to an external communication device (2) arranged in the near field area, wherein the emergency notification comprises the electronic measurement information at least partially and/or electronic information about the state of a vehicle which is derived from that electronic information, and
- transmitting of the emergency notification via the external communication device (2) into a wide-area network.

## Revendications

1. Agencement, avec
- un dispositif (1) pour la signalisation d'un cas d'urgence venant d'un véhicule, avec
- un boîtier (6),
- un dispositif de détection (40), qui est disposé dans le boîtier (6) et est adapté pour saisir des informations de mesures électroniques concernant un état d'urgence de véhicule d'un ou de plusieurs dispositifs de capteurs (42), qui sont formés dans le boîtier (6) et/ou en extérieur,
- un dispositif de télécommunication de données (43) qui est disposé et agencé dans le boîtier (6), pour émettre des signaux de données concernant une information de cas d'urgence par le biais d'une interface de données (45), l'information de cas d'urgence comprenant les informations de mesures électroniques au moins en partie et/ou des informations électroniques sur l'état du véhicule dérivées de celles-ci, le dispositif de télécommunication de données (43) étant agencé pour transmettre les signaux de données concernant l'information de cas d'urgence par le biais de l'interface de données (45) au moyen d'une télécommunication de données en champ proche sans fil sur un appareil de télécommunication externe (2), disposé dans une zone à champ proche, et
- un dispositif de connexion, qui est disposé dans le boîtier (6) et comporte un connecteur (8 ; 50) pour branchement dans une prise du véhicule automobile et,
- l'appareil de télécommunication externe (2) étant agencé pour transmettre l'information de cas d'urgence dans un réseau à longue distance.

2. Agencement la revendication 1, **caractérisé en ce que** le connecteur comporte au moins un contact de connecteur électrique (9), lequel est configuré pour être raccordé à l'état connecté à une alimentation en énergie électrique dans la prise du véhicule automobile par le biais d'un contact de douille attribué.

3. Agencement selon la revendication 1 ou 2, **caractérisé en ce que** le dispositif de détection (40) est couplé à un ou plusieurs dispositifs de capteurs (42) du groupe suivant du dispositif de capteurs : capteur d'accélération, capteur de vitesse de rotation (gyroscope), capteur de vitesse et capteur de position.

4. Agencement selon au moins l'une quelconque des revendications précédentes, **caractérisé en ce que** l'interface de données (45) comporte une connexion de câble (4), au moyen de laquelle une liaison de données par câble peut être constituée avec l'appareil de télécommunication externe (2) et le dispositif de télécommunication de données (43) est agencé pour transmettre les signaux de données par le biais de l'interface de données (45) à l'appareil de télécommunication externe (2) au moyen de la télécommunication de données par câble.

5. Agencement selon les revendications 2 et 4, **caractérisé en ce qu'**au moins un contact de connecteur électrique (9) est relié électriquement à la connexion de câble (4) de telle manière que l'appareil de télécommunication externe (2) est raccordé à l'état connecté par le biais de la connexion de câble à l'alimentation en énergie électrique dans la prise du véhicule automobile.

6. Agencement selon l'une quelconque des revendications précédentes, **caractérisé en ce que** le dispositif de télécommunication de données (43) est agencé pour transmettre les signaux de données à un dispositif de service éloigné au moyen d'une télécommunication de données sans fil par le biais de l'interface de données (45).

7. Procédé pour faire fonctionner un agencement avec un dispositif (1) pour la signalisation d'un cas d'urgence et un appareil de télécommunication externe (2) à partir d'un véhicule, le procédé comportant les étapes suivantes :
- préparation d'un dispositif (1) pour la signalisation d'un cas d'urgence qui comporte un boîtier (6), un dispositif de détection (40) et un dispositif de télécommunication de données (43), lesquels sont disposés dans le boîtier (6), ainsi qu'un dispositif de connexion disposé sur le boîtier (6) et formé avec un connecteur (8 ; 50),
- mise en place du dispositif (1) pour signalisation d'un cas d'urgence dans un véhicule, le connecteur (8 ; 50) étant connecté dans une prise de véhicule automobile du véhicule,
- saisie d'informations de mesures électroniques concernant un état de véhicule d'urgence depuis un ou plusieurs boîtiers et/ou dispositifs de capteurs (42) formés à l'extérieur par le dispositif de détection (40),
- envoi de signaux de données concernant une information de cas d'urgence par le biais d'une interface de données (45) du dispositif de télécommunication de données (43) au moyen d'une télécommunication de données en champ proche sans fil à un appareil de télécommunication externe (2) disposé dans la zone de champ proche, l'information de cas d'urgence comprenant les informations de mesures électroniques au moins en partie et/ou des informations d'état du véhicule électroniques dérivées de celles-ci, et
- transmission de l'information de cas d'urgence par l'appareil de télécommunication externe (2) dans un réseau à longue distance.
